# EUROPEAN PATENT APPLICATION

(11) **EP 4 773 188 A1**
(43) Date of publication of application: **08.07.2026**
(21) Application number: 24881477.4
(22) Date of filing: 15.10.2024
(51) Int. Cl.: H01M 4/02, H01M 4/66, H01M 50/531, H01M 50/536, H01M 10/04

(54) **ELECTRODE SHEET, BATTERY CELL, AND ELECTRIC DEVICE**

(30) Priority: 23.10.2023 CN 202311379274
(71) Applicant: Ningde Amperex Technology Limited, Ningde, Fujian 352100 (CN)
(72) Inventor: YAN, Jiaxiao, Ningde, Fujian 352100 (CN)
(74) Representative: Kraus & Lederer PartGmbB
(86) International application number: PCT/CN2024/124946
(87) International publication number: WO 2025/087111

(57) **Abstract**

The present application provides an electrode plate, a battery cell, and an electric device, the electrode plate including a current collector, a first transition layer, a second transition layer, two active substance layers, a first conductive member, and a second conductive member. The current collector includes a support layer, a first conductive layer, and a second conductive layer. The current collector further includes a first segment and a second segment. The first transition layer is located in the first segment. The second transition layer is located in the first segment. One active substance layer is disposed on the first transition layer, and the other active substance layer is disposed on the second transition layer. The first conductive member is disposed on the first conductive layer. The second conductive member is disposed on the second conductive layer. The first conductive member and the second conductive member are welded to form a plurality of weld marks, where at least one weld mark is further connected to the current collector. The current collector further includes a first section and a second section, where a projection of an edge section of the active substance layer adjacent to the weld marks coincides with a projection of the first section, and the second section is provided with the weld marks. The tensile strength of the first section is less than the tensile strength of the second section. The above electrode plate can improve safety.

## Description

### TECHNICAL FIELD

The present application relates to the field of energy storage technologies, and particularly to an electrode plate, a battery cell, and an electric device.

### BACKGROUND

Existing composite current collectors have a three-layer sandwich structure, with a polymer layer as the central layer and metal layers as the outer layers. When an electrode plate made from such a composite current collector is connected to an electrode terminal (for example, a tab), the composite current collector, due to an intermediate polymer layer incorporated therein, cannot be directly welded to the electrode terminal. An electrical connection member needs to be welded between the metal layer and the electrode terminal to achieve electrical connection. Under external mechanical impact, the welded joint of the electrical connection member is prone to cracking, forming detached metal debris, and such metal debris may cause a short circuit and compromise the safety of the electrode plate.

### SUMMARY

In view of the above situation, it is necessary to provide an electrode plate capable of improving safety.

An embodiment of the present application provides an electrode plate, the electrode plate including a current collector, a first transition layer, a second transition layer, two active substance layers, a first conductive member, and a second conductive member. The current collector includes a support layer, and a first conductive layer and a second conductive layer disposed on both sides of the support layer in a first direction, where the first direction is the thickness direction of the current collector. The current collector further includes a first segment and a second segment sequentially disposed along a second direction, where the first direction is perpendicular to the second direction. The first transition layer is located in the first segment and disposed on a surface of the first conductive layer facing away from the support layer. The second transition layer is located in the first segment and disposed on a surface of the second conductive layer facing away from the support layer. One of the active substance layers is disposed on a surface of the first transition layer facing away from the current collector, and the other active substance layer is disposed on a surface of the second transition layer facing away from the current collector. The first conductive member is disposed on the surface of the first conductive layer facing away from the support layer, where one end of the first conductive member is located in the second segment, and viewed along the first direction, the first conductive member is spaced apart from the first transition layer, and the other end of the first conductive member protrudes beyond the current collector in the second direction. The second conductive member is disposed on the surface of the second conductive layer facing away from the support layer, where one end of the second conductive member is located in the second segment, viewed along the first direction, the second conductive member is spaced apart from the second transition layer, and the other end of the second conductive member protrudes beyond the current collector in the second direction. The first conductive member and the second conductive member are welded to form a plurality of weld marks arranged along the second direction, where at least one weld mark is further connected to the current collector. The current collector further includes a first section and a second section. Along the first direction, a projection of an edge section of the active substance layer adjacent to the weld marks coincides with a projection of the first section, and the second section is provided with the weld marks. The tensile strength of the first section is less than the tensile strength of the second section.

In the above electrode plate, at least one weld mark is connected to the second section of the current collector to enhance the tensile strength of the second section. The tensile strength of the first section is less than that of the second section, so that the second section has better resistance to tensile and bending compared to the first section. In the event that the electrode plate is subjected to external impact causing damage to the first section, the second section can still maintain structural stability, reducing the risk of a short circuit caused by cracking of the weld marks and generation of metal debris, thereby improving the safety of the electrode plate.

In some embodiments of the present application, the tensile strength of the first section is greater than 22 N/15 mm to reduce the risk of the first section being damaged under external force due to excessively low tensile strength. The tensile strength of the second section is greater than 25 N/15 mm to reduce the risk of the second section being damaged under external force due to excessively low tensile strength.

In some embodiments of the present application, at least one weld mark is spaced apart from the current collector to enhance the structural stability of the first conductive member and the second conductive member, reducing the risk of a short circuit caused by the outward bending of sections of the first conductive member or second conductive member protruding from the current collector and contacting other structural components.

In some embodiments of the present application, the number of weld marks is three, two of which are further connected to the current collector to increase the welding area between the weld marks and the current collector, thereby improving the stability of the connection between the weld marks and the current collector. The remaining weld mark is spaced apart from the current collector to enhance the structural stability of the first conductive member and the second conductive member, reducing the risk of a short circuit caused by the outward bending of sections of the first conductive member or second conductive member protruding from the current collector and contacting other structural components.

In some embodiments of the present application, along the second direction, a spacing L1 between the first conductive member and the first transition layer satisfies: 0.05 mm ≤ L1 ≤ 0.5 mm, to reduce the risk of a short circuit between the first conductive member and other structural components in the first direction caused by the superposition of the first conductive member and the first transition layer during processing, and decrease the space occupied by the first conductive member in the second direction, thereby contributing to an increase in the energy density of the electrode plate. A spacing L2 between the second conductive member and the second transition layer satisfies: 0.05 mm ≤ L2 ≤ 0.5 mm, to reduce the risk of a short circuit between the second conductive member and other structural components in the first direction caused by the superposition of the second conductive member and the second transition layer during processing, and decrease the space occupied by the second conductive member in the second direction, thereby contributing to an increase in the energy density of the electrode plate.

In some embodiments of the present application, 0.2 mm ≤ L1 ≤ 0.3 mm, to further reduce the risk of a short circuit between the first conductive member and other structural components in the first direction caused by the superposition of the first conductive member and the first transition layer during processing, and decrease the space occupied by the first conductive member in the second direction, thereby contributing to an increase in the energy density of the electrode plate. 0.2 mm ≤ L2 ≤ 0.3 mm, to further reduce the risk of a short circuit between the second conductive member and other structural components in the first direction caused by the superposition of the second conductive member and the second transition layer during processing, and decrease the space occupied by the second conductive member in the second direction, thereby contributing to an increase in the energy density of the electrode plate.

In some embodiments of the present application, along the second direction, a spacing L3 between the first transition layer and an adjacent weld mark satisfies 0.05 mm ≤ L3 ≤ 1 mm; and a spacing L4 between the second transition layer and an adjacent weld mark satisfies 0.05 mm ≤ L4 ≤ 1 mm, to reduce the risk of false welding caused by the connection of the weld mark with the first transition layer and the second transition layer, and decrease the space occupied by the weld mark in the second direction, thereby contributing to an increase in the energy density of the electrode plate.

In some embodiments of the present application, 0.1 mm ≤ L3 ≤ 0.2 mm and 0.1 mm ≤ L4 ≤ 0.2 mm, to further reduce the risk of false welding caused by the connection of the weld mark with the first transition layer and the second transition layer, and decrease the space occupied by the weld mark in the second direction, thereby contributing to an increase in the energy density of the electrode plate.

In some embodiments of the present application, viewed along the first direction, the first transition layer includes two first outer edge portions protruding beyond both sides of the corresponding active substance layer in the second direction, and the second transition layer includes two second outer edge portions protruding beyond both sides of the corresponding active substance layer in the second direction. Along the second direction, the width of the first outer edge portion is 1 mm to 1.8 mm; and the width of the second outer edge portion is 1 mm to 1.8 mm, to reduce space waste caused by the portion of the first transition layer extending beyond the corresponding active substance layer while meeting processing tolerance requirements.

In some embodiments of the present application, the width of the first outer edge portion is 1.6 mm to 1.8 mm; and the width of the second outer edge portion is 1.6 mm ≤ L6 ≤ 1.8 mm, to further reduce space waste caused by the portion of the first transition layer extending beyond the corresponding active substance layer while meeting processing tolerance requirements.

In some embodiments of the present application, along the second direction, the width W1 of each weld mark satisfies: 1.5 mm ≤ W1 ≤ 4 mm, to enhance connection strength and decrease the space occupied by the weld mark, thereby reducing the risk of interference with subsequent processes. Along the first direction, the height H1 of each weld mark satisfies: 20 µm ≤ H1 ≤ 50 µm, to enhance the connection strength of the weld mark and reduce the risk of over-welding or false welding.

In some embodiments of the present application, 1.6 mm ≤ W1 ≤ 2.2 mm, to enhance the connection strength and decrease the space occupied by the weld mark, thereby reducing the risk of interference with subsequent processes. 30 µm ≤ H1 ≤ 35 µm, to further enhance the connection strength of the weld mark, and reduce the risk of over-welding or false welding.

In some embodiments of the present application, along the first direction, the thickness H2 of the current collector satisfies: 4 µm ≤ H2 ≤ 20 µm, to meet the structural strength requirements of the current collector and reduce space waste caused by the current collector occupying excessive space, thereby contributing to an increase in the energy density of the electrode plate. The thickness H3 of the first transition layer satisfies: 0.5 µm ≤ H3 ≤ 4 µm, to enhance the connection strength of the first transition layer and reduce space waste caused by the first transition layer, thereby contributing to an increase in the energy density of the electrode plate. The thickness H4 of the second transition layer satisfies: 0.5 µm ≤ H4 ≤ 4 µm, to enhance the connection strength of the second transition layer and reduce space waste caused by the second transition layer, thereby contributing to an increase in the energy density of the electrode plate.

In some embodiments of the present application, 6 µm ≤ H2 ≤ 10 µm, to further meet the structural strength requirements of the current collector and reduce space waste caused by the current collector occupying excessive space, thereby contributing to an increase in the energy density of the electrode plate. 1.5 µm ≤ H3 ≤ 2.5 µm, to further enhance the connection strength of the first transition layer and reduce space waste caused by the first transition layer, thereby contributing to an increase in the energy density of the electrode plate. 1.5 µm ≤ H4 ≤ 2.5 µm, to further enhance the connection strength of the second transition layer and reduce space waste caused by the first transition layer, thereby contributing to an increase in the energy density of the electrode plate.

In some embodiments of the present application, along the second direction, the width W2 of the second segment satisfies 1 mm ≤ W2 ≤ 5 mm, to enhance the connection strength between the second segment and the first conductive member and the second conductive member and reduce space waste caused by the second segment, thereby contributing to an increase in the energy density of the electrode plate.

In some embodiments of the present application, 1.5 mm ≤ W2 ≤ 2.2 mm, to further enhance the connection strength between the second segment and the first conductive member and the second conductive member and reduce space waste caused by the second segment, thereby contributing to an increase in the energy density of the electrode plate.

In some embodiments of the present application, the current collector further includes a third segment. Along the second direction, the third segment is located at an end of the first segment away from the second segment, and the third segment is configured to connect to an electrode terminal. The width W3 of the third segment satisfies 1 mm ≤ W3 ≤ 5 mm, to enhance the connection strength between the third segment and the electrode terminal and reduce space waste caused by the third segment, thereby contributing to an increase in the energy density of the electrode plate.

In some embodiments of the present application, the electrode plate further includes two protective members, where the two protective members are respectively located on both sides of the current collector in the first direction, one protective member has its two ends respectively bonded to a surface of the first conductive member facing away from the current collector and a surface of an edge section of the corresponding active substance layer facing away from the first transition layer, and the other protective member has its two ends respectively bonded to a surface of the second conductive member facing away from the current collector and a surface of an edge section of the corresponding active substance layer facing away from the second transition layer. The two protective members are configured to enhance the structural stability of the edge sections, insulate and isolate the corresponding covered regions from other structural components in the first direction, reducing the risk of short circuits and improving the reliability of the electrode plate.

In some embodiments of the present application, the first transition layer and the second transition layer each include an inorganic material, a polymer material, and conductive particles. The inorganic material includes one or more of alumina, boehmite, silica, water-insoluble carbonates, and water-insoluble sulfates. The polymer material includes one or more of polyolefins, polyesters, and rubbers. The conductive particles include one or more of conductive carbon and conductive carbon nanotubes.

An embodiment of the present application further provides a battery cell, where the battery cell includes an electrode assembly, and the electrode assembly includes any one of the electrode plates described in the above embodiments.

An embodiment of the present application further provides an electric device, including any one of the electrode plates described in the above embodiments or any one of the battery cells described in the above embodiments.

In the above electrode plate, at least one weld mark is connected to the second section of the current collector to enhance the tensile strength of the second section. The tensile strength of the first section is less than that of the second section, so that the second section has better resistance to tensile and bending compared to the first section. In the event that the electrode plate is subjected to external impact causing damage to the first section, the second section can still maintain structural stability, reducing the risk of a short circuit caused by cracking of the weld marks and generation of metal debris, thereby improving the safety of the electrode plate.

### BRIEF DESCRIPTION OF DRAWINGS

FIG. 1 is a schematic plan view of an electrode plate according to an embodiment of the present application.
FIG. 2 is a cross-sectional view along line A-A of FIG. 1.
FIG. 3 is a schematic plan view of an electrode plate according to another embodiment of the present application.
FIG. 4 is a cross-sectional view along line B-B of FIG. 3.
FIG. 5 is a schematic structural diagram of a battery cell according to an embodiment of the present application.
FIG. 6 is a schematic structural diagram of an electric device according to an embodiment of the present application.

**Description of reference signs**

| | |
|---|---|
| Electrode plate | 100 |
| Battery cell | 200 |
| Electric device | 300 |
| Current collector | 10 |
| First section | 101 |
| Second section | 102 |
| Support layer | 11 |
| First conductive layer | 12 |
| Second conductive layer | 13 |
| First segment | 10a |
| Second segment | 10b |
| Third segment | 10c |
| First transition layer | 20 |
| First outer edge portion | 21 |
| Second transition layer | 30 |
| Second outer edge portion | 31 |
| Active substance layer | 40 |
| Edge section | 40a |
| First conductive member | 50 |
| First gap | 51 |
| Second conductive member | 60 |
| Second gap | 61 |
| Protective member | 70 |
| Electrode assembly | 201 |
| First electrode plate | 100a |
| Second electrode plate | 100b |
| Separator | 80 |
| Tab | 202 |
| Tab lead | 203 |
| First direction | **Z** |
| Second direction | **X** |

The following detailed description will further explain the present application in conjunction with the above drawings.

### DESCRIPTION OF EMBODIMENTS

The technical solutions in some embodiments of the present application will be described below with reference to the drawings in these embodiments of the present application. Apparently, the described embodiments are only some rather than all embodiments of the present application.

It should be noted that when an element is referred to as being "connected" to another element, it may be directly connected to the other element, or there may be an intervening element. When an element is referred to as being "disposed" on another element, it may be directly disposed on the other element, or there may be an intervening element. When a value is considered "equal" to another value, it means that the two are equal within a set tolerance, with the tolerance range being within 5%. That is, when at least one of the two values fluctuates within the set tolerance range, even if their values are not equal, they are still deemed substantially equal. When a ratio between two values is considered "1:1," it means that the two are equal within a set tolerance, with the tolerance range being within 5%. That is, when at least one of the two values fluctuates within the set tolerance range, even if their values are not equal, their ratio is still deemed equal.

Unless otherwise defined, all technical and scientific terms used herein have the same meaning as commonly understood by those skilled in the technical field of the present application. The terms used in the specification of the present application are for the purpose of describing specific embodiments only and are not intended to limit the present application. The term "and/or" as used herein includes any and all combinations of one or more related listed items.

It should be understood that, considering actual processing tolerances, the term "perpendicular" in the technical solutions of the present application is used to describe an ideal state between two components. In actual production or use, an approximately perpendicular state may exist between the two components. For example, in terms of numerical description, perpendicular may refer to an angle between two lines ranging from 90° ± 10°, an angle between two planes ranging from 90° ± 10°, or an angle between a line and a plane ranging from 90° ± 10°. The two components described as "perpendicular" may not be absolutely straight lines or planes; they may be roughly straight or planar, and as long as their overall extension direction appears straight or planar from a macroscopic perspective, they can be considered as a "straight line" or "plane."

An embodiment of the present application provides an electrode plate, the electrode plate including a current collector, a first transition layer, a second transition layer, two active substance layers, a first conductive member, and a second conductive member. The current collector includes a support layer, and a first conductive layer and a second conductive layer disposed on both sides of the support layer in a first direction, where the first direction is the thickness direction of the current collector. The current collector further includes a first segment and a second segment sequentially disposed along a second direction, where the first direction is perpendicular to the second direction. The first transition layer is located in the first segment and disposed on a surface of the first conductive layer facing away from the support layer. The second transition layer is located in the first segment and disposed on a surface of the second conductive layer facing away from the support layer. One of the active substance layers is disposed on a surface of the first transition layer facing away from the current collector, and the other active substance layer is disposed on a surface of the second transition layer facing away from the current collector. The first conductive member is disposed on the surface of the first conductive layer facing away from the support layer, where one end of the first conductive member is located in the second segment, and viewed along the first direction, the first conductive member is spaced apart from the first transition layer, and the other end of the first conductive member protrudes beyond the current collector in the second direction. The second conductive member is disposed on the surface of the second conductive layer facing away from the support layer, where one end of the second conductive member is located in the second segment, viewed along the first direction, the second conductive member is spaced apart from the second transition layer, and the other end of the second conductive member protrudes beyond the current collector in the second direction. The first conductive member and the second conductive member are welded to form a plurality of weld marks arranged along the second direction, where at least one weld mark is further connected to the current collector. The current collector further includes a first section and a second section. Along the first direction, a projection of an edge section of the active substance layer adjacent to the weld marks coincides with a projection of the first section, and the second section is provided with the weld marks. The tensile strength of the first section is less than the tensile strength of the second section.

In the above electrode plate, at least one weld mark is connected to the second section of the current collector to enhance the tensile strength of the second section. The tensile strength of the first section is less than that of the second section, so that the second section has better resistance to tensile and bending compared to the first section. In the event that the electrode plate is subjected to external impact causing damage to the first section, the second section can still maintain structural stability, reducing the risk of a short circuit caused by cracking of the weld marks and generation of metal debris, thereby improving the safety of the electrode plate.

The embodiments of the present application will be further described below with reference to the accompanying drawings.

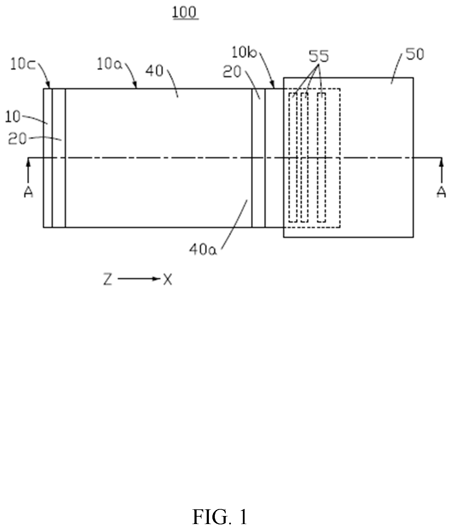

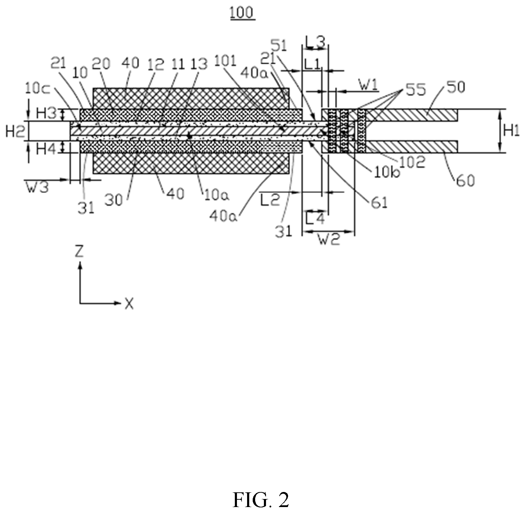

Referring to FIG. 1 and FIG. 2 together, an embodiment of the present application provides an electrode plate 100, where the electrode plate 100 is used to form a battery cell for application in a secondary battery. A secondary battery refers to a battery that can be recharged to reactivate the active material for continued use after discharge. Optionally, the electrode plate 100 may be a positive electrode plate or a negative electrode plate.

The electrode plate 100 includes a current collector 10, a first transition layer 20, a second transition layer 30, two active substance layers 40, a first conductive member 50, a second conductive member 60, and two protective members 70.

The current collector 10 is a composite current collector configured to collect current. Specifically, the current collector 10 includes a support layer 11, and a first conductive layer 12 and a second conductive layer 13 disposed on both sides of the support layer 11 in a first direction Z. The first direction Z is the thickness direction of the current collector 10.

The support layer 11 is made of a polymer insulating material and has high structural strength and low density and weight, enabling a reduction in the thickness and weight of the current collector 10. Optionally, the polymer insulating material includes one or more of polyethylene terephthalate (Polyethylene terephthalate, PET), polypropylene (PP), polyethylene (Polyethylene, PE), polyimide (Polyimide, PI), polyetherketone (Polyetherketone, PEK), and polyphenylene sulfide (Polyphenylene sulfide, PPS).

The first conductive layer 12 and the second conductive layer 13 are made of a metallic material. Compared to conventional current collectors made entirely of metal, the first conductive layer 12 and the second conductive layer 13 disposed on both sides of the support layer 11 are thinner. When the current collector 10 is subjected to mechanical damage from external impact, this configuration helps reduce the generation of metal burrs, thereby lowering the risk of short circuits. Optionally, the metallic material includes one or more of aluminum, copper, nickel, silver, gold, and iron.

The current collector 10 further includes a first segment 10a and a second segment 10b sequentially disposed along a second direction X, where the first direction Z is perpendicular to the second direction X. Optionally, the second direction X is the width direction of the current collector 10. The first segment 10a is configured to connect to the first transition layer 20 and the second transition layer 30, and the second segment 10b is configured to connect to the first conductive member 50 and the second conductive member 60.

The first transition layer 20 is located in the first segment 10a and disposed on a surface of the first conductive layer 12 facing away from the support layer 11. The second transition layer 30 is located in the first segment 10a and disposed on a surface of the second conductive layer 13 facing away from the support layer 11. The first transition layer 20 and the second transition layer 30 are respectively configured to connect to the corresponding active substance layers 40 to enhance the connection strength between the active substance layers 40 and the current collector 10. In addition, the first transition layer 20 and the second transition layer 30 can reduce the risk of sharp portions in the active substance layers 40 piercing through the first conductive layer 12 or the second conductive layer 13.

The first transition layer 20 and the second transition layer 30 each include an inorganic material, a polymer material, and conductive particles. The inorganic material includes one or more of alumina, boehmite, silica, water-insoluble carbonates, and water-insoluble sulfates. The polymer material includes one or more of polyolefins, polyesters, and rubbers. The conductive particles include one or more of conductive carbon and conductive carbon nanotubes.

One of the active substance layers 40 is disposed on a surface of the first transition layer 20 facing away from the current collector 10, and the other active substance layer 40 is disposed on a surface of the second transition layer 30 facing away from the current collector 10. The active substance layers 40 are configured to generate current, and the current generated by the active substance layers 40 is collected to the current collector 10 through the corresponding first transition layer 20 and second transition layer 30.

In some embodiments, the active substance layer 40 exhibits positive polarity, and the active substance layer 40 is applied to the surface of the first transition layer 20 facing away from the current collector 10 or the surface of the second transition layer 30 facing away from the current collector 10 by a process such as extrusion coating, transfer coating, or spray coating.

The coating weight of the active substance layer 40 is 100 mg/1540.25 mm² to 400 mg/1540.25 mm². When the coating weight is too low (less than 100 mg/1540.25 mm²), the energy density of the electrode plate 100 tends to be excessively low. When the coating weight is too high (greater than 400 mg/1540.25 mm²), it may result in material waste, and in severe cases, it may cause excessive capacity, leading to the formation of dendrites, and the dendrites may pierce through the separator, causing a short circuit, thereby compromising the safety of the battery cell including the electrode plate 100. By limiting the coating weight of the active substance layer 40 to 100 mg/1540.25 mm² to 400 mg/1540.25 mm², the energy density of the electrode plate 100 can be improved, material waste can be reduced, and the safety of the battery cell including the electrode plate 100 can be enhanced.

Optionally, the coating weight of the active substance layer 40 can be one of 100, 110, 120, 130, 140, 150, 160, 170, 180, 190, 200, 210, 220, 230, 240, 250, 260, 270, 280, 290, 300, 310, 320, 330, 340, 350, 360, 370, 380, 390, 400, with the corresponding unit being mg/1540.25 mm².

The first conductive member 50 is disposed on the surface of the first conductive layer 12 facing away from the support layer 11, where one end of the first conductive member 50 is located in the second segment 10b, and viewed along the first direction Z, the first conductive member 50 is spaced apart from the first transition layer 20, forming a first gap 51 to reduce the risk of a short circuit between the first conductive member 50 and other structural components in the first direction Z caused by the superposition of the first conductive member 50 and the first transition layer 20. The other structural components may include, but are not limited to, adjacent electrode plates of different polarity. The other end of the first conductive member 50 protrudes beyond the current collector 10 in the second direction X to facilitate connection with an electrode terminal.

The second conductive member 60 is disposed on the surface of the second conductive layer 13 facing away from the support layer 11, where one end of the second conductive member 60 is located in the second segment 10b, and viewed along the first direction Z, the second conductive member 60 is spaced apart from the second transition layer 30, forming a second gap 61 to reduce the risk of a short circuit between the second conductive member 60 and other structural components in the first direction Z caused by the superposition of the second conductive member 60 and the second transition layer 30. The other structural components may include, but are not limited to, adjacent electrode plates of different polarity. The other end of the second conductive member 60 protrudes beyond the current collector 10 in the second direction X to facilitate connection with an electrode terminal.

Referring to FIG. 1 and FIG. 2 together, the first conductive member 50 and the second conductive member 60 are welded to form a plurality of weld marks 55 arranged along the second direction X. At least one weld mark 55 is connected to the current collector 10 to enhance the tensile strength of the corresponding portion of the current collector 10. Specifically, the first conductive member 50 and the second conductive member 60 are each an aluminum strip, and the weld mark 55 connected to the current collector 10 is formed by roll welding the first conductive member 50, the second conductive member 60, and the current collector 10 located between the first conductive member 50 and the second conductive member 60. The weld marks 55 extend through the corresponding current collector 10 along the first direction Z to connect the first conductive member 50 and the second conductive member 60.

The current collector 10 further includes a first section 101 and a second section 102. The first section 101 is located in the first segment 10a, and the second section 102 is located in the second segment 10b. Along the first direction Z, a projection of an edge section 40a of the active substance layer 40 adjacent to the weld marks 55 coincides with a projection of the first section 101, and the second section 102 is connected to the weld marks 55. The tensile strength of the first section 101 is less than the tensile strength of the second section 102, so that the second section 102 has better resistance to tensile and bending compared to the first section 101. In the event that the electrode plate 100 is subjected to external impact causing damage to the first section 101, the second section 102 can still maintain structural stability, reducing the risk of a short circuit caused by cracking of the weld marks 55 and generation of metal debris, thereby improving the safety of the electrode plate 100.

Furthermore, under external impact, the first section 101 may be damaged before the second section 102. This can help reduce the current collected by the current collector 10 and, if the weld mark 55 is damaged, can lower the risk of a short circuit caused by high current, thereby further enhancing the safety of the electrode plate 100.

It should be noted that the tensile strength of the first section 101 and the second section 102 is measured using the following tensile strength method. The electrode plate 100 is cut into samples with a width of 15 mm, where one sample includes the first section 101, and another sample includes the second section 102. A GOTECH tensile testing machine is used to stretch each sample at a constant rate of 60 mm/min, and the maximum tensile strength at the time of fracture of the first section 101 and the second section 102 is recorded, respectively.

In the above electrode plate 100, at least one weld mark 55 is connected to the second section 102 of the current collector 10 to enhance the tensile strength of the second section 102. The tensile strength of the first section 101 is less than that of the second section 102, so that the second section 102 has better resistance to tensile and bending compared to the first section 101. In the event that the electrode plate 100 is subjected to external impact causing damage to the first section 101, the second section 102 can still maintain structural stability, reducing the risk of a short circuit caused by cracking of the weld marks 55 and generation of metal debris, thereby improving the safety of the electrode plate 100.

Referring to FIG. 1 and FIG. 2 together, in some embodiments, at least one weld mark 55 is spaced apart from the current collector 10 to enhance the structural stability of the first conductive member 50 and the second conductive member 60, reducing the risk of a short circuit caused by the outward bending of sections of the first conductive member 50 or second conductive member 60 protruding from the current collector 10 and contacting other structural components. Specifically, the weld mark 55 spaced apart from the current collector 10 is formed by roll welding the first conductive member 50 and the second conductive member 60.

In some embodiments, the number of weld marks 55 is three, where two weld marks 55 are further connected to the current collector 10 to increase the welding area between the weld marks 55 and the current collector 10, thereby improving the stability of the connection between the weld marks 55 and the current collector 10. The other weld mark 55 is spaced apart from the current collector 10 to enhance the structural stability of the first conductive member 50 and the second conductive member 60, reducing the risk of a short circuit caused by the outward bending of sections of the first conductive member 50 or second conductive member 60 protruding from the current collector 10 and contacting other structural components.

Optionally, in other embodiments, the number of weld marks 55 may be 2, 4, 5, 6, or any other natural number greater than 2.

In some embodiments, the tensile strength of the first section 101 is greater than 22 N/15 mm to reduce the risk of the first section 101 being damaged under external force due to excessively low tensile strength (below 22 N/15 mm). The tensile strength of the second section 102 is greater than 25 N/15 mm to reduce the risk of the second section 102 being damaged under external force due to excessively low tensile strength (below 25 N/15 mm).

Optionally, the tensile strength of the first section 101 may be one of 23 N/15 mm, 24 N/15 mm, 25 N/15 mm, 26 N/15 mm, 27 N/15 mm, 28 N/15 mm, 29 N/15 mm, 30 N/15 mm, or any other value within a range greater than 22 N/15 mm. Correspondingly, the tensile strength of the second section 102 may be one of 26 N/15 mm, 27 N/15 mm, 28 N/15 mm, 29 N/15 mm, 30 N/15 mm, 31 N/15 mm, 32 N/15 mm, 33 N/15 mm, 34 N/15 mm, or any other value within the range greater than 25 N/15 mm.

It should be noted that the difference between the tensile strength of the second section 102 and the tensile strength of the first section 101 is at least 3 N/15 mm. Optionally, the difference between the tensile strength of the second section 102 and the first section 101 may be one of 3 N/15 mm, 4 N/15 mm, 5 N/15 mm, 6 N/15 mm, 7 N/15 mm, or any other value within the range greater than 3 N/15 mm.

Referring to FIG. 1 and FIG. 2 together, in some embodiments, along the second direction X, a spacing L1 between the first conductive member 50 and the first transition layer 20 satisfies: 0.05 mm ≤ L1 ≤ 0.5 mm. When L1 is too small (less than 0.05 mm), it is likely to lead to a short circuit between the first conductive member 50 and other structural components in the first direction Z caused by the superposition of the first conductive member 50 and the first transition layer 20 during processing. When L1 is too large (greater than 0.5 mm), it is likely to cause the first conductive member 50 to occupy excessive space in the second direction X, resulting in space waste. By limiting 0.05 mm ≤ L1 ≤ 0.5 mm, the risk of a short circuit between the first conductive member 50 and other structural components in the first direction Z caused by the superposition of the first conductive member 50 and the first transition layer 20 during processing is reduced, and the space occupied by the first conductive member 50 in the second direction X is decreased, thereby contributing to an increase in the energy density of the electrode plate 100.

Optionally, L1 may be one of 0.05 mm, 0.06 mm, 0.07 mm, 0.08 mm, 0.09 mm, 0.1 mm, 0.2 mm, 0.3 mm, 0.4 mm, 0.5 mm, or any other value within the range of 0.05 mm to 0.5 mm.

Further, 0.2 mm ≤ L1 ≤ 0.3 mm, to further reduce the risk of a short circuit between the first conductive member 50 and other structural components in the first direction Z caused by the superposition of the first conductive member 50 and the first transition layer 20 during processing, and decrease the space occupied by the first conductive member 50 in the second direction X, thereby contributing to an increase in the energy density of the electrode plate 100.

Referring to FIG. 1 and FIG. 2 together, in some embodiments, along the second direction X, a spacing L2 between the second conductive member 60 and the second transition layer 30 satisfies: 0.05 mm ≤ L2 ≤ 0.5 mm. When L2 is too small (less than 0.05 mm), it is likely to lead to a short circuit between second conductive member 60 and other structural components in the first direction Z caused by the superposition of the second conductive member 60 and the second transition layer 30 during processing. When L2 is too large (greater than 0.5 mm), it is likely to cause the second conductive member 60 to occupy excessive space in the second direction X, resulting in space waste. By limiting 0.05 mm ≤ L2 ≤ 0.5 mm, the risk of a short circuit between second conductive member 60 and other structural components in the first direction Z caused by the superposition of the second conductive member 60 and the second transition layer 30 during processing is reduced, and the space occupied by the second conductive member 60 in the second direction X is decreased, thereby contributing to an increase in the energy density of the electrode plate 100.

Optionally, L2 may be one of 0.05 mm, 0.06 mm, 0.07 mm, 0.08 mm, 0.09 mm, 0.1 mm, 0.2 mm, 0.3 mm, 0.4 mm, 0.5 mm, or any other value within the range of 0.05 mm to 0.5 mm.

Further, 0.2 mm ≤ L2 ≤ 0.3 mm, to further reduce the risk of a short circuit between the second conductive member 60 and other structural components in the first direction Z caused by the superposition of the second conductive member 60 and the second transition layer 30 during processing, and decrease the space occupied by the second conductive member 60 in the second direction X, thereby contributing to an increase in the energy density of the electrode plate 100.

In some embodiments, L1 = L2, and along the first direction Z, projections of the first gap 51 and the second gap 61 overlap, so that the load-bearing positions between the first transition layer 20 and the first conductive member 50 are approximately aligned with those between the second transition layer 30 and the second conductive member 60. This helps ensure uniform stress distribution on both sides of the current collector 10, thereby improving the structural stability and reliability of the electrode plate 100.

Referring to FIG. 1 and FIG. 2 together, in some embodiments, along the second direction X, a spacing L3 between the first transition layer 20 and an adjacent weld mark 55 satisfies 0.05 mm ≤ L3 ≤ 1 mm; and a spacing L4 between the second transition layer 30 and an adjacent weld mark 55 satisfies 0.05 mm ≤ L4 ≤ 1 mm. When the spacing between the first transition layer 20 and the second transition layer 30 and the corresponding weld mark 55 is too small (less than 0.05 mm), it is likely to cause the weld mark 55 to connect with the first transition layer 20 and the second transition layer 30 during formation, leading to a risk of false welding of the weld marks 55. When the spacing between the first transition layer 20 and the second transition layer 30 and the corresponding weld mark 55 is too large (greater than 1 mm), it is likely to cause the weld mark 55 to occupy excessive space in the second direction X, resulting in space waste. By limiting 0.05 mm ≤ L3 ≤ 1 mm and 0.05 mm ≤ L4 ≤ 1 mm, the risk of false welding caused by the connection of the weld mark 55 with the first transition layer 20 and the second transition layer 30 is reduced, and the space occupied by the weld mark 55 in the second direction X is decreased, thereby contributing to an increase in the energy density of the electrode plate 100.

Optionally, L3 may be one of 0.05 mm, 0.06 mm, 0.07 mm, 0.08 mm, 0.09 mm, 0.1 mm, 0.2 mm, 0.3 mm, 0.4 mm, 0.5 mm, 0.6 mm, 0.7 mm, 0.8 mm, 0.9 mm, 1 mm, or any other value within the range of 0.05 mm to 1 mm; L4 may be one of 0.05 mm, 0.06 mm, 0.07 mm, 0.08 mm, 0.09 mm, 0.1 mm, 0.2 mm, 0.3 mm, 0.4 mm, 0.5 mm, 0.6 mm, 0.7 mm, 0.8 mm, 0.9 mm, 1 mm, or any other value within the range of 0.05 mm to 1 mm.

Further, 0.1 mm ≤ L3 ≤ 0.2 mm and 0.1 mm ≤ L4 ≤ 0.2 mm, to further reduce the risk of false welding caused by the connection of the weld mark 55 with the first transition layer 20 and the second transition layer 30, and decrease the space occupied by the weld mark 55 in the second direction X, thereby contributing to an increase in the energy density of the electrode plate 100.

In some embodiments, L3 = L4, so that the load-bearing positions between the first transition layer 20 and the corresponding weld mark 55 are approximately aligned with those between the second transition layer 30 and the corresponding weld mark 55. This helps ensure uniform stress distribution on both sides of the current collector 10, thereby improving the structural stability and reliability of the electrode plate 100.

Referring to FIG. 1 and FIG. 2 together, in some embodiments, along the second direction X, the width of the active substance layer 40 on the first transition layer 20 is less than the width of the first transition layer 20. Viewed along the first direction Z, the first transition layer 20 includes two first outer edge portions 21 protruding beyond both sides of the corresponding active substance layer 40 in the second direction X. Along the second direction X, the width of the first outer edge portion 21 is 1 mm to 1.8 mm. When the width of the first outer edge portion 21 is too small (less than 1 mm), it is not conducive to meeting processing tolerance requirements; and when the width of the first outer edge portion 21 is too large (greater than 1.8 mm), it is likely to cause the first outer edge portion 21 to occupy excessive space in the second direction X, resulting in space waste. By limiting the width of the first outer edge portion 21 to 1 mm to 1.8 mm, space waste caused by the first outer edge portion 21 in the second direction X can be reduced while meeting processing tolerance requirements.

Optionally, along the second direction X, the widths of the two first outer edge portions 21 are equal.

Optionally, the width of the first outer edge portion 21 may be one of 1 mm, 1.1 mm, 1.2 mm, 1.3 mm, 1.4 mm, 1.5 mm, 1.6 mm, 1.7 mm, 1.8 mm, or any other value within the range of 1 mm to 1.8 mm.

Further, the width of the first outer edge portion 21 is 1.6 mm to 1.8 mm, to further reduce space waste caused by the first outer edge portion 21 in the second direction X while meeting processing tolerance requirements.

Referring to FIG. 1 and FIG. 2 together, in some embodiments, along the second direction X, the width of the active substance layer 40 on the second transition layer 30 is less than the width of the second transition layer 30. Viewed along the first direction Z, the second transition layer 30 includes two second outer edge portions 31 protruding beyond both sides of the corresponding active substance layer 40 in the second direction X. Along the second direction X, the width of the second outer edge portion 31 is 1 mm to 1.8 mm. When the width of the second outer edge portion 31 is too small (less than 1 mm), it is not conducive to meeting processing tolerance requirements; and when the width of the second outer edge portion 31 is too large (greater than 1.8 mm), it is likely to cause the second outer edge portion 31 to occupy excessive space in the second direction X, resulting in space waste. By limiting the width of the second outer edge portion 31 to 1 mm to 1.8 mm, space waste caused by the second outer edge portion 31 in the second direction X can be reduced while meeting processing tolerance requirements.

Optionally, along the second direction X, the widths of the two second outer edge portions 31 are equal.

Optionally, the width of the second outer edge portion 31 may be one of 1 mm, 1.1 mm, 1.2 mm, 1.3 mm, 1.4 mm, 1.5 mm, 1.6 mm, 1.7 mm, 1.8 mm, or any other value within the range of 1 mm to 1.8 mm.

Further, the width of the second outer edge portion 31 is 1.6 mm to 1.8 mm, to further reduce space waste caused by the second outer edge portion 31 in the second direction X while meeting processing tolerance requirements.

In some embodiments, along the second direction X, the width of the first transition layer 20 is equal to the width of the second transition layer 30. Viewed along the first direction Z, the projections of the first transition layer 20 and the second transition layer 30 are offset. The projection of the first transition layer 20 includes a misaligned region that does not overlap with the second transition layer 30, and correspondingly, the projection of the second transition layer 30 includes a misaligned region that does not overlap with the first transition layer 20. The two misaligned regions are spaced apart in the second direction X, and the widths of the two misaligned regions in the second direction X are equal and less than or equal to 2 mm, to facilitate defining the positional relationship between the active substance layer 40, the first conductive member 50, and the second conductive member 60 through the first transition layer 20 and the second transition layer 30 during production.

Optionally, the width of each misaligned region in the second direction X may be one of 0.1 mm, 0.2 mm, 0.3 mm, 0.4 mm, 0.5 mm, 0.6 mm, 0.7 mm, 0.8 mm, 0.9 mm, 1 mm, 1.1 mm, 1.2 mm, 1.3 mm, 1.4 mm, 1.5 mm, 1.6 mm, 1.7 mm, 1.8 mm, 1.9 mm, 2 mm, or any other value within the range less than or equal to 2 mm.

It can be understood that the width of each misaligned region may be 0, meaning that along the first direction Z, the projections of the first transition layer 20 and the second transition layer 30 overlap.

Referring to FIG. 1 and FIG. 2 together, in some embodiments, along the second direction X, the width W1 of each weld mark 55 satisfies: 1.5 mm ≤ W1 ≤ 4 mm. When W1 is small (less than 1.5 mm), it is likely to result in weak connection strength; and when W1 is large (greater than 1.8 mm), it is likely to cause the weld mark 55 to occupy excessive space and interfere with subsequent processes for connecting the first conductive member 50 and the second conductive member 60 to the electrode terminal. By limiting 1.5 mm ≤ W1 ≤ 4 mm, the connection strength is enhanced, and the space occupied by the weld mark 55 is decreased, thereby reducing the risk of interference with subsequent processes.

Optionally, W1 may be one of 1.5 mm, 1.6 mm, 1.7 mm, 1.8 mm, 1.9 mm, 2 mm, 2.1 mm, 2.2 mm, 2.3 mm, 2.4 mm, 2.5 mm, 2.6 mm, 2.7 mm, 2.8 mm, 2.9 mm, 3 mm, 3.1 mm, 3.2 mm, 3.3 mm, 3.4 mm, 3.5 mm, 3.6 mm, 3.7 mm, 3.8 mm, 3.9 mm, 4 mm, or any other value within the range of 1.5 mm to 4 mm.

Further, 1.6 mm ≤ W1 ≤ 2.2 mm, to further enhance connection strength and decrease the space occupied by the weld mark 55, thereby reducing the risk of interference with subsequent processes.

Referring to FIG. 1 and FIG. 2 together, in some embodiments, along the first direction Z, the height H1 of each weld mark 55 satisfies: 20 µm ≤ H1 ≤ 50 µm. When H1 is small (less than 20 µm), it is likely to cause over-welding during the welding process, leading to fracture or detachment at the welding position; and when H1 is large (greater than 50 µm), it is likely to cause false welding during the welding process, leading to fracture or detachment at the welding position. By limiting 20 µm ≤ H1 ≤ 50 µm, the connection strength of the weld mark 55 is enhanced, and the risk of over-welding or false welding is reduced.

Optionally, H1 may be one of 20 µm, 21 µm, 22 µm, 23 µm, 24 µm, 25 µm, 26 µm, 27 µm, 28 µm, 29 µm, 30 µm, 31 µm, 32 µm, 33 µm, 34 µm, 35 µm, 36 µm, 37 µm, 38 µm, 39 µm, 40 µm, 41 µm, 42 µm, 43 µm, 44 µm, 45 µm, 46 µm, 47 µm, 48 µm, 49 µm, 50 µm, or any other value within the range of 20 µm to 50 µm.

Further, 30 µm ≤ H1 ≤ 35 µm, to further enhance the connection strength of the weld mark 55 and reduce the risk of over-welding or false welding.

Referring to FIG. 1 and FIG. 2 together, in some embodiments, along the first direction Z, the thickness H2 of the current collector 10 satisfies: 4 µm ≤ H2 < 20 µm, to meet the structural strength requirements of the current collector 10 and reduce space waste caused by the current collector 10 occupying excessive space, thereby contributing to an increase in the energy density of the electrode plate 100.

Optionally, H2 may be one of 4 µm, 5 µm, 6 µm, 7 µm, 8 µm, 9 µm, 10 µm, 11 µm, 12 µm, 13 µm, 14 µm, 15 µm, 16 µm, 17 µm, 18 µm, 19 µm, 20 µm, or any other value within the range of 4 µm to 20 µm.

Further, 6 µm ≤ H2 ≤ 10 µm, to further meet the structural strength requirements of the current collector 10 and reduce space waste caused by the current collector 10 occupying excessive space, thereby contributing to an increase in the energy density of the electrode plate 100.

Referring to FIG. 1 and FIG. 2 together, in some embodiments, along the first direction Z, the thickness H3 of the first transition layer 20 satisfies: 0.5 µm ≤ H3 ≤ 4 µm. When H3 is too small (less than 0.5 µm), it is likely to result in weak connection strength of the first transition layer 20; and when H3 is too large (greater than 4 µm), it is likely to cause the first transition layer 20 to occupy excessive space, resulting in space waste. By limiting 0.5 µm ≤ H3 ≤ 4 µm, the connection strength of the first transition layer 20 is enhanced, and space waste caused by the first transition layer 20 is reduced, thereby contributing to an increase in the energy density of the electrode plate 100.

Optionally, H2 may be one of 0.5 µm, 0.6 µm, 0.7 µm, 0.8 µm, 0.9 µm, 1 µm, 1.1 µm, 1.2 µm, 1.3 µm, 1.4 µm, 1.5 µm, 1.6 µm, 1.7 µm, 1.8 µm, 1.9 µm, 2 µm, 2.1 µm, 2.2 µm, 2.3 µm, 2.4 µm, 2.5 µm, 2.6 µm, 2.7 µm, 2.8 µm, 2.9 µm, 3 µm, 3.1 µm, 3.2 µm, 3.3 µm, 3.4 µm, 3.5 µm, 3.6 µm, 3.7 µm, 3.8 µm, 3.9 µm, 4 µm, or any other value within the range of 0.5 µm to 4 µm.

Further, 1.5 µm ≤ H3 ≤ 2.5 µm, to further enhance the connection strength of the first transition layer 20 and reduce space waste caused by the first transition layer 20, thereby contributing to an increase in the energy density of the electrode plate 100.

Referring to FIG. 1 and FIG. 2 together, in some embodiments, along the first direction Z, the thickness H4 of the second transition layer 30 satisfies: 0.5 µm ≤ H4 ≤ 4 µm. When H4 is too small (less than 0.5 µm), it is likely to result in weak connection strength of the second transition layer 30; and when H4 is too large (greater than 4 µm), it is likely to cause the second transition layer 30 to occupy excessive space, resulting in space waste. By limiting 0.5 µm ≤ H4 ≤ 4 µm, the connection strength of the second transition layer 30 is enhanced, and space waste caused by the second transition layer 30 is reduced, thereby contributing to an increase in the energy density of the electrode plate 100.

Optionally, H2 may be one of 0.5 µm, 0.6 µm, 0.7 µm, 0.8 µm, 0.9 µm, 1 µm, 1.1 µm, 1.2 µm, 1.3 µm, 1.4 µm, 1.5 µm, 1.6 µm, 1.7 µm, 1.8 µm, 1.9 µm, 2 µm, 2.1 µm, 2.2 µm, 2.3 µm, 2.4 µm, 2.5 µm, 2.6 µm, 2.7 µm, 2.8 µm, 2.9 µm, 3 µm, 3.1 µm, 3.2 µm, 3.3 µm, 3.4 µm, 3.5 µm, 3.6 µm, 3.7 µm, 3.8 µm, 3.9 µm, 4 µm, or any other value within the range of 0.5 µm to 4 µm.

Further, 1.5 µm ≤ H4 ≤ 2.5 µm, to further enhance the connection strength of the second transition layer 30 and reduce space waste caused by the second transition layer 30, thereby contributing to an increase in the energy density of the electrode plate 100.

In some embodiments, H3 = H4, to help ensure uniform stress distribution on both sides of the current collector 10, thereby improving the structural stability and reliability of the electrode plate 100.

Referring to FIG. 1 and FIG. 2 together, in some embodiments, along the second direction X, the width W2 of the second segment 10b satisfies 1 mm ≤ W2 ≤ 5 mm. When W2 is too small (less than 1 mm), it is likely to result in a small connection region between the second segment 10b and the first conductive member 50 and the second conductive member 60, leading to weak connection strength; and when W2 is too large (greater than 5 µm), it is likely to cause the second segment 10b to occupy excessive space, resulting in space waste. By limiting 1 mm ≤ W2 ≤ 5 mm, the connection strength between the second segment 10b and the first conductive member 50 and the second conductive member 60 is enhanced, and space waste caused by the second segment 10b is reduced, thereby contributing to an increase in the energy density of the electrode plate 100.

Optionally, W2 may be one of 1 mm, 2 mm, 3 mm, 4 mm, 5 mm, or any other value within the range of 1 mm to 5 mm.

Further, 1.5 mm ≤ W2 ≤ 2.2 mm, to further enhance the connection strength between the second segment 10b and the first conductive member 50 and the second conductive member 60, and to reduce space waste caused by the second segment 10b, thereby contributing to an increase in the energy density of the electrode plate 100.

Referring to FIG. 1 and FIG. 2 together, in some embodiments, the current collector 10 further includes a third segment 10c. Along the second direction X, the third segment 10c is located at an end of the first segment 10a away from the second segment 10b, and the third segment 10c is configured to connect to an electrode terminal. The width W3 of the third segment satisfies 1 mm ≤ W3 ≤ 5 mm. When the width of the third segment 10c is too small (less than 1 mm), it is likely to result in a small connection region between the third segment 10c and the electrode terminal, leading to weak connection strength; and when the width of the third segment 10c is large (greater than 5 µm), it is likely to cause the third segment 10c to occupy excessive space, resulting in space waste. By limiting 1 mm ≤ W3 ≤ 5 mm, the connection strength between the third segment 10c and the electrode terminal is enhanced, and space waste caused by the third segment 10c is reduced, thereby contributing to an increase in the energy density of the electrode plate 100.

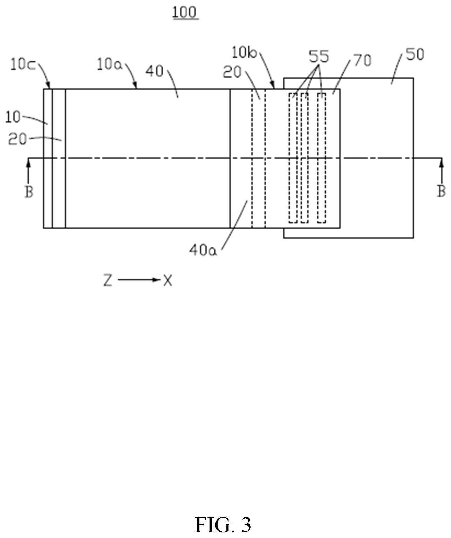

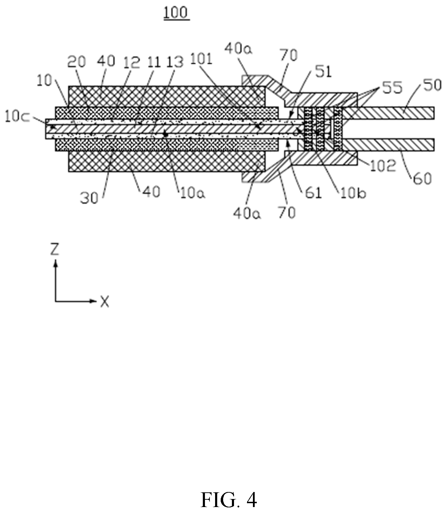

Referring to FIG. 3 and FIG. 4 together, in some embodiments, the electrode plate 100 further includes two protective members 70. The two protective members 70 are respectively located on both sides of the current collector 10 in the first direction Z. The protective member 70 includes a polyolefin-based hot-melt adhesive and an inorganic salt pigment. The polyolefin-based hot-melt adhesive is used to provide the protective member 70 with adhesiveness and insulation, and the inorganic salt pigment is employed to impart color to the protective member 70, facilitating distinction from other structural components. One of the protective members 70 has its two ends respectively bonded to a surface of the first conductive member 50 facing away from the current collector 10 and a surface of an edge section 40a of the corresponding active substance layer 40 facing away from the first transition layer 20. The other protective member 70 has its two ends respectively bonded to a surface of the second conductive member 60 facing away from the current collector 10 and a surface of an edge section 40a of the corresponding active substance layer 40 facing away from the second transition layer 30. The two protective members 70 are configured to enhance the structural stability of the edge sections 40a, insulate and isolate the corresponding covered regions from other structural components in the first direction Z, reducing the risk of a short circuit and improving the reliability of the electrode plate 100.

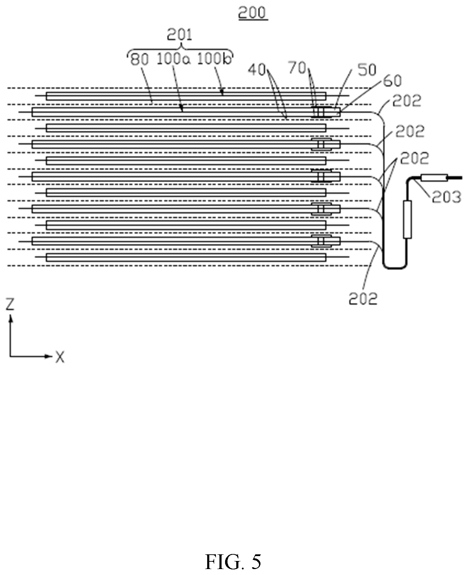

Referring to FIG. 5, an embodiment of the present application further provides a battery cell 200, including an electrode assembly 201, where the electrode assembly 201 includes any one of the electrode plates 100 described in the above embodiments.

In some embodiments, the electrode assembly 201 includes a first electrode plate 100a, a separator 80, and a second electrode plate 100b sequentially stacked along the first direction Z. The first electrode plate 100a exhibits positive polarity, and the second electrode plate 100b exhibits negative polarity. At least one of the first electrode plate 100a and the second electrode plate 100b serves as the electrode plate 100. When the first electrode plate 100a serves as the electrode plate 100, the corresponding active substance layer 40 exhibits positive polarity; and when the second electrode plate 100b serves as the electrode plate 100, the corresponding active substance layer 40 exhibits negative polarity.

In some embodiments, the first electrode plate 100a serves as the electrode plate 100, and a plurality of first electrode plates 100a are arranged at intervals along the first direction Z. Along the first direction Z, projections of the second segments 10b of the plurality of first electrode plates 100a at least partially overlap. The protective members 70 insulate and isolate the corresponding weld marks 55 from the adjacent second electrode plate 100b, reducing the risk of internal short circuits in the battery cell 200.

In some embodiments, the battery cell 200 further includes a plurality of tabs 202 and a tab lead 203. One end of each tab 202 is connected to the first conductive member 50 and the second conductive member 60 of the first electrode plate 100a, and the other end of each tab 202 extends outward. The outwardly extending ends of the plurality of tabs 202 are gathered and interconnected on one side of the electrode assembly 201 to connect to the tab lead 203. The tab lead 203 is configured to connect to an external circuit.

In some embodiments, along the second direction X, the projection of the tab 202 lies within the projection range of the electrode assembly 201 to improve the space utilization rate of the tab 202 on one side of the electrode assembly 201, thereby increasing the energy density of the battery cell 200.

Optionally, the gathered portion of the plurality of tabs 202 is bent to facilitate connection with the tab lead 203.

It can be understood that, in other embodiments, the electrode assembly 201 includes a first electrode plate 100a, a separator 80, and a second electrode plate 100b sequentially wound. The first electrode plate 100a exhibits positive polarity, and the second electrode plate 100b exhibits negative polarity. At least one of the first electrode plate 100a and the second electrode plate 100b serves as the electrode plate 100.

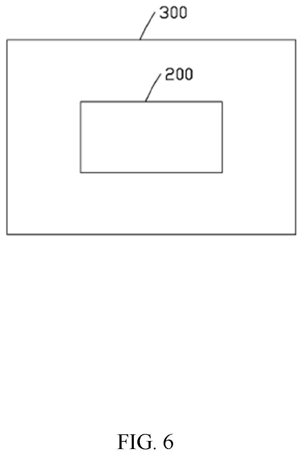

Referring to FIG. 6, an embodiment of the present application further provides an electric device 300, including the electrode plate 100 described in any one of the above embodiments or the battery cell 200 described in any one of the above embodiments. The electric device 300 may be a vehicle, a mobile phone, a portable device, a laptop, a ship, a spacecraft, an electric toy, an electric tool, or the like.

In summary, in the above electrode plate 100, battery cell 200, and electric device 300, at least one weld mark 55 is connected to the second section 102 of the current collector 10 to enhance the tensile strength of the second section 102. The tensile strength of the first section 101 is less than that of the second section 102, so that the second section 102 has better resistance to tensile and bending compared to the first section 101. In the event that the electrode plate 100 is subjected to external impact causing damage to the first section 101, the second section 102 can still maintain structural stability, reducing the risk of a short circuit caused by cracking of the weld marks 55 and generation of metal debris, thereby improving the safety of the electrode plate 100.

In addition, those skilled in the art may make other changes within the spirit of the present application. It is to be understood that these changes made in accordance with the spirit of the present application should be included within the scope disclosed by the present application.

## Claims

1. An electrode plate, wherein the electrode plate comprises:
a current collector comprising a support layer, and a first conductive layer and a second conductive layer disposed on both sides of the support layer in a first direction, wherein the first direction is the thickness direction of the current collector, and the current collector further comprising a first segment and a second segment sequentially disposed along a second direction, wherein the first direction is perpendicular to the second direction;
a first transition layer located in the first segment and disposed on a surface of the first conductive layer facing away from the support layer;
a second transition layer located in the first segment and disposed on a surface of the second conductive layer facing away from the support layer;
two active substance layers, wherein one active substance layer is disposed on a surface of the first transition layer facing away from the current collector, and the other active substance layer is disposed on a surface of the second transition layer facing away from the current collector;
a first conductive member disposed on the surface of the first conductive layer facing away from the support layer, wherein one end of the first conductive member is located in the second segment, and viewed along the first direction, the first conductive member is spaced apart from the first transition layer, and the other end of the first conductive member protrudes beyond the current collector in the second direction; and
a second conductive member disposed on the surface of the second conductive layer facing away from the support layer, wherein one end of the second conductive member is located in the second segment, viewed along the first direction, the second conductive member is spaced apart from the second transition layer, and the other end of the second conductive member protrudes beyond the current collector in the second direction; wherein
the first conductive member and the second conductive member are welded to form a plurality of weld marks arranged along the second direction, with at least one weld mark being further connected to the current collector, the current collector further comprises a first section and a second section, and along the first direction, a projection of an edge section of the active substance layer adjacent to the weld marks coincides with a projection of the first section, the second section is provided with the weld marks, and the tensile strength of the first section is less than the tensile strength of the second section.

2. The electrode plate according to claim 1, wherein the tensile strength of the first section is greater than 22 N/15 mm; and the tensile strength of the second section is greater than 25 N/15 mm.

3. The electrode plate according to claim 1, wherein at least one weld mark is spaced apart from the current collector.

4. The electrode plate according to claim 3, wherein the number of weld marks is three, two of which are further connected to the current collector, and the remaining weld mark is spaced apart from the current collector.

5. The electrode plate according to claim 1, wherein, along the second direction, a spacing L1 between the first conductive member and the first transition layer satisfies: 0.05 mm ≤ L1 ≤ 0.5 mm; and a spacing L2 between the second conductive member and the second transition layer satisfies: 0.05 mm ≤ L2 ≤ 0.5 mm.

6. The electrode plate according to claim 5, wherein 0.2 mm ≤ L1 ≤ 0.3 mm; and 0.2 mm ≤ L2 ≤ 0.3 mm.

7. The electrode plate according to claim 1, wherein, along the second direction, a spacing L3 between the first transition layer and an adjacent weld mark satisfies 0.05 mm ≤ L3 ≤ 1 mm; and a spacing L4 between the second transition layer and an adjacent weld mark satisfies 0.05 mm ≤ L4 ≤ 1 mm.

8. The electrode plate according to claim 7, wherein 0.1 mm ≤ L3 ≤ 0.2 mm; and 0.1 mm ≤ L4 ≤ 0.2 mm.

9. The electrode plate according to claim 1, wherein, viewed along the first direction, the first transition layer comprises two first outer edge portions protruding beyond both sides of the corresponding active substance layer in the second direction, and the second transition layer comprises two second outer edge portions protruding beyond both sides of the corresponding active substance layer in the second direction; and
along the second direction, a width of the first outer edge portion is 1 mm to 1.8 mm; and a width of the second outer edge portion is 1 mm to 1.8 mm.

10. The electrode plate according to claim 9, wherein the width of the first outer edge portion is 1.6 mm to 1.8 mm; and the width of the second outer edge portion is 1.6 mm ≤ L6 ≤ 1.8 mm.

11. The electrode plate according to claim 1, wherein, along the second direction, the width W1 of each weld mark satisfies: 1.5 mm ≤ W1 ≤ 4 mm; and along the first direction, the height H1 of each weld mark satisfies: 20 µm ≤ H1 ≤ 50 µm.

12. The electrode plate according to claim 11, wherein 1.6 mm ≤ W1 ≤ 2.2 mm; and 30 µm ≤ H1 ≤ 35 µm.

13. The electrode plate according to claim 1, wherein, along the first direction, the thickness H2 of the current collector satisfies: 4 µm ≤ H2 ≤ 20 µm; the thickness H3 of the first transition layer satisfies: 0.5 µm ≤ H3 ≤ 4 µm; and the thickness H4 of the second transition layer satisfies: 0.5 µm ≤ H4 ≤ 4 µm.

14. The electrode plate according to claim 13, wherein 6 µm ≤ H2 ≤ 10 µm; 1.5 µm ≤ H3 ≤ 2.5 µm; and 1.5 µm ≤ H4 ≤ 2.5 µm.

15. The electrode plate according to claim 1, wherein, along the second direction, the width W2 of the second segment satisfies 1 mm ≤ W2 ≤ 5 mm.

16. The electrode plate according to claim 15, wherein 1.5 mm ≤ W2 ≤ 2.2 mm.

17. The electrode plate according to claim 1, wherein the current collector further comprises a third segment, along the second direction, the third segment is located at an end of the first segment away from the second segment, the third segment is configured to connect to an electrode terminal, and the width W3 of the third segment satisfies 1 mm ≤ W3 ≤ 5 mm.

18. The electrode plate according to claim 1, wherein the electrode plate further comprises two protective members, wherein the two protective members are respectively located on both sides of the current collector in the first direction, one protective member has its two ends respectively bonded to a surface of the first conductive member facing away from the current collector and a surface of an edge section of the corresponding active substance layer facing away from the first transition layer, and the other protective member has its two ends respectively bonded to a surface of the second conductive member facing away from the current collector and a surface of an edge section of the corresponding active substance layer facing away from the second transition layer.

19. The electrode plate according to claim 1, wherein the first transition layer and the second transition layer each comprise an inorganic material, a polymer material, and conductive particles, wherein the inorganic material comprises one or more of alumina, boehmite, silica, water-insoluble carbonates, and water-insoluble sulfates, the polymer material comprises one or more of polyolefins, polyesters, and rubbers, and the conductive particles comprise one or more of conductive carbon and conductive carbon nanotubes.

20. A battery cell comprising an electrode assembly, wherein the electrode assembly comprises the electrode plate according to any one of claims 1 to 19.

21. An electric device comprising the electrode plate according to any one of claims 1 to 19 or the battery cell according to claim 20.
